# EUROPÄISCHE PATENTSCHRIFT

(11) **EP 1 985 435 B1**
(45) Veröffentlichungstag und Bekanntmachung des Hinweises auf die Patenterteilung: **15.09.2010**
(21) Anmeldenummer: 08007774.6
(22) Anmeldetag: 22.04.2008
(51) Int. Cl.: B29C 70/34, B29C 70/44, B60B 1/00, B60B 5/02, B60B 21/08

(54) **Verfahren und Vorrichtung zur Herstellung einer Felge**
Method and device for manufacturing a wheel rim
Procédé et dispositif destinés à la fabrication d'une jante

(30) Priorität: 24.04.2007 DE 102007019587
(43) Veröffentlichungstag der Anmeldung: 29.10.2008
(73) Patentinhaber: DT Swiss AG, 2500 Biel (CH)
(72) Erfinder: Reuteler, Andreas, 2502 Biel (CH)
(74) Vertreter: Schütte, Hartmut

(56) Entgegenhaltungen:
- EP-A- 1 231 077
- EP-A- 1 386 756
- EP-A- 1 506 882
- US-A- 5 549 360
- US-A- 5 975 645
- US-A1- 2004 021 366
- US-B1- 6 347 839

## Beschreibung

Die Erfindung betrifft ein Verfahren und eine Vorrichtung zur Herstellung einer Felge, sowie eine nach dem Verfahren hergestellte Felge, welche insbesondere für Fahrräder und dergleichen vorgesehen ist.

Im Bereich der Amateure und des professionellen Radsports spielen die Belastbarkeit und das Gewicht der Komponenten eine entscheidende Rolle, da die Benutzer Wert auf hochwertige und leichte Komponenten legen. Ein wichtiger Aspekt ist insbesondere auch die Qualität der Komponenten.

Um das Gewicht der Felgen von Fahrrädern zu verringern, sind Felgen aus faserverstärktem Kunststoff bekannt geworden, bei denen bei geringerem Gesamtgewicht eine vergleichbare Stabilität wie bei Metallfelgen erzielbar ist.

Aus der EP1506882 A1 ist eine Fahrradfelge und ein Verfahren zur Herstellung einer Fahrradfelge aus einem Faserverbundmaterial bekannt geworden, wobei die Felge ein Felgenbett, einen Felgenboden und das Felgenbett und den Felgenboden verbindenden Felgenflanken, sowie Felgenhörner umfasst. Dabei werden nacheinander die einzelnen Lagen in der Form aufeinander gelegt, um so erste Lagen und zweite Lagen zu bilden. Dort, wo sich das Felgenbett an die Felgenflanke bzw. das Felgenhorn übergeht, sind entlang des Umfangs faserförmige Verstärkungselemente eingelegt, um dort die Felge zu verstärken.

Aus der US 2004/0021366 A1 ist eine faserverstärkte Felge für ein Fahrrad bekannt geworden, wobei die Felge aus zwei Profilhälften zusammengesetzt wird. Die Lagen zur Herstellung der beiden Felgenhälften werden übereinander gelegt und sind an den Rändern eingeschnitten, um eine leichteres Drapieren auf dem Formumfang zu ermöglichen.

Aus der US 5,549,360 ist eine Felge mit geringen Gewicht aus einem Faserverbundmaterial bekannt geworden, wobei das Faserverbundmaterial wenigstens zwei unterschiedliche Typen von verstärkungsfasern enthält, um insgesamt eine leichte Felge zur Verfügung zustellen.

Die EP 1 386 756 A2 offenbart eine Felge für ein Fahrrad, bei der auf dem Umfang ein Kern vorgesehen ist, der von einem Faserverbundmaterial bedeckt ist. Dabei hat der Kern keine tragende Funktion, sondern stellt die Grundform zur Bedeckung mit den Faserverbundschichten zur Verfügung.

So ist beispielsweise mit der EP 1 231 077 B1 ein Verfahren zur Herstellung einer Felge für ein Fahrrad und eine Vorrichtung zur Herstellung einer Felge bekannt geworden, wonach zur Herstellung einer Hohlkammerfelge nacheinander eine bestimmte Anzahl von Lagen eines strukturellen Fasergewebes, das eine Kunststoffmatrix enthält, einzeln auf den inneren Teil einer Form aufgebracht werden. Die aufgebrachte vorgegebene Anzahl von Lagen bilden die innere Wand, die äußere Wand, die zwei seitlichen Wände und die tragenden Flächen der Felge. Anschließend wird ein aufblasbarer Beutel auf die Lagen aufgebracht. Der aufblasbare Beutel wird leicht aufgeblasen, um sein vorgesehenes Volumen einzunehmen. Anschließend werden mehrere Lagen, nämlich eine erste vorbestimmte Anzahl von Lagen direkt auf dem leicht aufgeblasenen Beutel umgelegt und dort auf dem Beutel gefaltet, sodass der Beutel allseitig von der ersten vorgegebenen Anzahl der Lagen vollständig umgeben ist. Anschließend wird auf die umgefalteten Lagen ein Kern aufgebracht. Der Kern weist einen hohen Wärmeausdehnungskoeffizienten auf, um bei der erhöhten Aushärtungstemperatur Druck auf die Lagen auszuüben. Dann werden die restlichen Lagen, nämlich eine zweite vorgegebene Anzahl von Lagen, direkt auf dem Kern gefaltet. Anschließend wird die Form mit einem äußeren Teil verschlossen und der leicht aufgeblasene Beutel wird mit Luft auf den vollständigen Betriebsdruck aufgeblasen, um die Lagen gegen die Form zu pressen. Danach wird die Form auf eine erhöhte Temperatur gebracht, die ausreichend ist, um ein Netzwerk der Kunststoffmatrix zu erzeugen. Es wird die Fahrradfelge aus der Form genommen und anschließend der Kern entfernt. Die überstehenden Felgenhörner werden gekürzt und werden in einem nachfolgenden mechanischen Bearbeitungsschritt in die gewünschte Form gebracht.

Nachteilig an dem bekannten Verfahren ist, dass die Lagen einzeln in die Form eingelegt werden und somit die Reproduzierbarkeit des Herstellungsverfahrens begrenzt ist. Ein weiterer Nachteil ist, dass an den besonders belasteten Stellen im Felgenboden, wo die Speichen in der Regel befestigt werden, die Materialstärke gering ist, während sie an anderen Stellen größer als benötigt ist. Bei den bekannten Felgen ist die Wandstärke im Bereich des Felgenbodens überall gleich.

Es ist deshalb die Aufgabe der vorliegenden Erfindung, ein anderes Verfahren zur Herstellung einer Fahrradfelge zur Verfügung zu stellen, bei dem eine höhere Reproduzierbarkeit vorliegt und bei dem der Felgenboden eine unterschiedliche und insbesondere erhöhte Wandstärke aufweisen kann.

Diese Aufgabe wird gelöst durch das Verfahren mit dem Merkmalen des Anspruchs 1 und durch eine Vorrichtung zur Herstellung einer Felge mit den Merkmalen des Anspruchs 14. Bevorzugte Weiterbildungen und Ausgestaltungen der Erfindung sind Gegenstand der Unteransprüche.

Bei dem erfindungsgemäßen Verfahren zur Herstellung einer Felge, welche insbesondere für den Einsatz an Fahrrädern geeignet ist, dient das Verfahren zur Herstellung einer Felge, welche ein Felgenbett, einen Felgenboden, sowie seitliche Felgenflanken und Felgenhörner umfasst, zwischen denen ein Drahtreifen aufnehmbar ist. Das erfindungsgemäße Verfahren umfasst dabei die folgenden Schritte in dieser oder einer anderen sinnvollen Reihenfolge:
- Auflegen wenigstens einer ersten Anzahl von Streifen eines fasergewebeumfassenden Materials auf eine separate Unterlage, wobei die erste Anzahl von Streifen eine erste Breite, eine erste Länge und eine erste Form aufweist. Anschließend wird wenigstens eine zweite Anzahl von Streifen des fasergewebeumfassenden Materials auf die Unterlage aufgelegt, wobei die zweite Anzahl von Streifen eine von der Form der ersten Streifen abweichende zweite Form aufweist, um aus der ersten Anzahl und wenigstens der zweiten Anzahl der Streifen ein erstes mehrschichtiges Laminatband zu bilden. Dabei entspricht die Länge der zweiten Streifen insbesondere im Wesentlichen der Länge der ersten Streifen.
- Es wird ein zweites mehrschichtiges Laminatband hergestellt, welches schmaler als das erste Laminatband ist, wobei insbesondere gleichartige Streifen verwendet werden. Bei beiden Laminatbändern kann das als Matrixmaterial dienende Harz mit einem Pinsel oder dergleichen aufgestrichen und mit einer Rolle verteilt werden.
- Das z.B. im Wesentlichen flachliegende erste Laminatband wird zu einem V-förmigen Laminatband umgeformt. Die Umformung kann über eine Rolleneinrichtung oder durch eine Umformpresse erfolgen, die das flachliegende Laminatband insbesondere mittig vorfaltet.
- Danach wird das V-förmige erste Laminatband entlang des Umfangs bzw. auf den Umfang des inneren Teils einer Grundform eines Werkzeugs eingelegt, wobei über den Umfang des Werkzeugs eine etwa V-förmige Nut vorgesehen ist, die als Form zur Herstellung der Felge dient und die insbesondere dem Außenprofil der herzustellenden Felge entspricht.
- Nach dem Einlegen des V-förmigen ersten Laminatbandes in die Grundform wird ein Kern auf das erste Laminatband in der Grundform aufgelegt. Der Kern erstreckt sich dabei insbesondere über den gesamten Umfang der Grundform.
- Auf den Kern wird das zweite Laminatband aufgelegt, welches das Felgenbett und einen Teil der Wandstärke der Felgenflanken insbesondere im Bereich der Felgenhörner bildet.
- Es folgt das Einlegen eines ersten im Wesentlichen ringförmigen Felgenbettringes auf das zweite Laminatband. Vorzugsweise wird auch ein zweiter im Wesentlichen ebenfalls ringförmiger Felgenbettring auf das zweite Laminatband aufgelegt. Dabei liegen beide Felgenbettringe seitlich insbesondere an dem zweiten Laminatband an. Ein insbesondere keilförmiger Spreizring zwischen den beiden Felgenbettringen dient vorteilhafterweise zum Spreizen der Felgenbettringe. Die Felgenflanken werden innen durch das zweite Laminatband gebildet, während die äußeren Seiten von dem ersten Laminatband gebildet werden. Der Bereich der Felgenflanken wird durch den Spreizring und die Felgenbettringe verpresst, sodass die dort vorhandenen Lagen beim Aushärten unter Druck gesetzt sind.
- Nach dem Aufbringen eines Außenringes wird das Werkzeug aufgeheizt und für eine vorbestimmte Zeitdauer bei vorbestimmten Temperaturbedingungen temperiert, um das Aushärten der Felge zu gewährleisten, welches insbesondere durch ein Vernetzen oder Verschmelzen des Matrixmaterials erfolgt.
- Zum Abschluss wird die Felge aus dem Werkzeug entnommen, insbesondere nachdem das Werkzeug und die Felge abgekühlt sind.

Die Erfindung hat viele Vorteile. Das Auflegen einer ersten Anzahl von Streifen eines ein Fasergewebe umfassenden Materials auf eine separate und insbesondere ebene Unterlage erlaubt ein hohes Maß an Reproduzierbarkeit des Vorgangs, da die einzelnen Streifen wunschgemäß vorkonfektioniert werden können und dann auf der Unterlage im Prinzip ideal aufeinandergelegt werden können. Dazu ist z.B. ein Anschlag vorhanden, um die einzelnen Streifen aneinander auszurichten.

Die Bildung des Laminatbandes kann auch automatisiert werden, indem das Aufeinanderlegen maschinell erfolgt, wodurch eine erhebliche Reduktion der Kosten möglich ist, da der Anteil der Handarbeit bei der Herstellung konventioneller Felgen aus faserverstärktem Werkstoffen sehr hoch ist. Außerdem ist eine präzise Anfertigung des Laminatbandes möglich.

Auf die Unterlage bzw. auf die erste Anzahl von Streifen des fasergewebeumfassenden Materials wird wenigstens eine zweite Anzahl von Streifen des fasergewebeumfassenden Materials gelegt. Dabei weist die zweite Anzahl von Streifen eine gegenüber der ersten Anzahl der Streifen abweichende Form und/oder Breite, insbesondere aber die gleiche Länge auf.

Beispielsweise kann die zweite Anzahl der Streifen zur Verstärkung der Speichenlöcher dienen und an den für die Speichenlöcher vorgesehenen Stellen Verstärkungsringe aufweisen, die nur durch schmale Streifen oder Fäden miteinander verbunden sind. Eine Winkelzuordnung ist beim Auflegen der Streifen möglich, da das spätere Ventilloch der Felge eine genaue Positionierung ermöglicht.

Zusätzlich zu oder anstelle von einem oder mehreren Streifen zur Verstärkung der Speichenlöcher werden vorzugsweise auch noch schmalere Streifen zur Verstärkung des Felgenbodens eingesetzt.

Durch diese Verfahrensschritte wird erreicht, das ein erstes mehrschichtiges Laminatband vorgefertigt wird, welches individuell an die vorliegenden Bedürfnisse angepasst werden kann. Die erste und die zweite Anzahl von Streifen kann jeweils gleich oder größer als eins sein. Das erste Laminatband umfasst insbesondere zwei, drei, vier, fünf oder auch mehr Streifen.

So kann insbesondere im Bereich des Felgenbodens durch zusätzliche Streifen geringerer Breite die Wandstärke erhöht werden, um die Stabilität des Felgenbodens zu erhöhen, da dort in der Regel die Speichen bzw. Speichennippel befestigt werden. Hierzu ist es besonders bevorzugt, dass wenigstens ein Streifen zur Verstärkung der Speichenlöcher vorgesehen ist, der an den Speichenlöchern Verstärkungen bildet, während zwischen den Speichenlöchern die Verstärkungsstreifen nur wenig Material aufweisen. So wird die Felge nur an den wichtigen Stellen verstärkt.

Bevor der Kern in die Form eingelegt wird, ist es auch möglich, dass der Kern auf einer ebenen Unterlage zunächst mit einer Gewebelage umwickelt oder mit einem Gewebeschlauch überzogen wird. So können weitere Verstärkungsschichten auf den Kern aufgebracht werden, insbesondere zur Verstärkung des Felgenbodens. Durch die Aufbringung der Schichten außerhalb der Form wird eine reproduzierbare Anordnung der Verstärkungslagen ermöglicht.

Der Kern kann z.B. aus einem eutektischen Metall bestehen, welches durch eine entsprechende Temperaturerhöhung wieder geschmolzen werden kann, so dass der Kern nach der Aushärtung aus der Felge entfernt wird. Um eine Vermischung des eutektischen Metalls mit anderen Materialien zu vermeiden, wird der Kern vorzugsweise von einer geeigneten Schutzschicht umgeben, die nach der Herstellung der fertigen Felge durch das Ventilloch wieder entfernt wird. Da das Metall für die Herstellung des Kerns wieder zurück gewonnen wird, wird es anschließend in einer Kernform wieder in die gewünschte Form gebracht.

Bevorzugt ist auch der Einsatz eines Kerns aus z.B. einem wasserlöslichen Material, welcher nach der Aushärtung ausgewaschen wird, um den Kern nicht in der Felge zu belassen. Dazu kann der Kern von einer Folie umgeben sein, in die nach der Aushärtung Wasser oder ein geeignetes anderes Lösungsmittel eingebracht wird, um den Kern aufzulösen und auszuspülen. Anschließend wird die Folie wieder aus der Felge entfernt. Eine andere Möglichkeit besteht darin, einen Kern aus z.B. Schaumstoff oder aus aufgeschäumten Polystyrol vorzusehen, der aufgrund des geringen Gewichts in der Felge verbleibt. Oder der Kern wird vor dem Einsatz von einer Schutzschicht umgeben und durch ein Lösungsmittel ausgewaschen.

Eine weitere bevorzugte Möglichkeit ist die Verwendung wenigstens eines mit einem flüssigen Fluid gefüllten Kerns. Der Kern ist insbesondere mit Wasser oder Ö1 oder dergleichen gefüllt und ist mit einem Druckausgleichsventil verbunden, um beim Aufheizen der Form den Druck auszugleichen. Nach dem Aushärten kann das Fluid dann aus dem Kern rückstandsfrei abgesaugt und die Hülle des Kerns entfernt werden, so dass kein zusätzliches Gewicht mehr in der Felge verbleibt.

In anderen Ausgestaltungen wird ein schlaffer Sack eingesetzt, der in die Form eingelegt wird. Oberhalb des schlaffen Sacks wird dann ein fester Kern eingebracht, der z.B. von einer Gewebelage oder von einem Gewebeschlauch umgeben ist. Der dadurch gebildete Steg dient zur Verstärkung der Felge in seitlicher Richtung. Dadurch wird zusammen mit dem durch das Felgenbett definierten Quersteg eine doppelte Verstärkung in seitlicher Richtung erzielt, wodurch die hohen Bremskräfte besser aufgenommen und abgeleitet werden können. Ein erheblicher Vorteil einer solchen Ausgestaltung ist auch, dass den Biegemomenten, die durch den hohen Reifeninnendruck auf die Felgenhörner ausgeübt werden, dauerhaft besser Stand gehalten werden kann.

Bei der Herstellung werden nach dem Auflegen des ersten Laminatbands in die Form gegebenenfalls Verstärkungsfasern und/oder Verstärkungslagen eingelegt. Danach wird ein schlaffer Sack eingelegt, der aber erst nach dem Verschließen der Form gefüllt wird, um die Verstärkungslagen gegen die Form zu pressen.

Oberhalb des noch schlaffen Sacks wird das Laminatband in die Form eingelegt, wobei dessen Länge so bemessen ist, dass die Lagen des ersten Laminatbands und des zweiten Laminatbands bündig an den Felgenhörnern abschließen. So wird eine passgenaue Einlage auch ohne festen Kern ermöglicht. Die Lagen des zweiten Laminatbands bilden das Felgenbett der Felge. Nach dem Einlegen des Laminatbands werden die Felgenbettringe und der Spreizring eingebracht.

Generell bieten zwei separate seitliche Verbindungsstege zwischen den beiden Seiten- bzw. Bremsflanken viele Vorteile, da die Belastbarkeit der Felge zunimmt.

Bevorzugt ist auch eine Ausgestaltung, bei der ein Kern am Felgenboden vorgesehen ist, an den sich radial nach außen ein Gewebeschlauch anschließt, in dem ein weiterer Kern oder ein füllbarer schlaffer Sack angeordnet ist. Falls dort ein füllbarer Sack vorgesehen ist, wird er erst nach dem Verschließen der Form gefüllt.

Weiterhin ist es durch das erfindungsgemäße Verfahren möglich, spezielle Bereiche an der Felge gezielt zu verstärken, wie insbesondere den Felgenboden oder die Bremsflanken. Durch die gezielte Verstärkung des Laminatbandes an den Stellen, die den Felgenboden oder die Felgenhörner bilden, kann insgesamt eine höhere Qualität und Wertigkeit des Produktes realisiert werden. Da das Anfertigen des Laminatbandes auf der separaten Unterlage vorgenommen wird, kann das erheblich reproduzierbarer vorgenommen werden, als im Stand der Technik. Die erzielbare Qualität steigt.

Die radial nach innen abstehenden Teile der Felgenhörner werden vorzugsweise durch das zweite Laminatband gebildet. Vorzugsweise werden die Schichten des zweiten Laminatbandes am radial äußeren Ende um 180° umgeklappt, so dass die radial nach innen vorstehenden Teile der Felgenhörner durch umgeklappte Abschnitte des zweiten Laminatbandes gebildet werden. Möglich ist auch der Einsatz separater Hornbänder oder Gewebeeinheiten zur Ausformung der nach innen überstehenden Teile der Felgenhörner.

Besonders bevorzugt ist es, dass unterhalb der außenliegenden Bremsflanke eine Indikatorschicht eingesetzt wird, die sich z.B. optisch von den anderen Lagen absetzt. Möglich ist z.B. die Einarbeitung farblich anderer Fasern, so dass nach dem Verschleiß der Bremsschicht der Benutzer deutlich auf das Ende der Lebensdauer hingewiesen wird. Bevorzugt wird eine Bremsschicht mit Glasfaserverstärkungen eingesetzt, während die anderen Lagen aus Karbonfasermaterial oder dergleichen bestehen. Schon durch das unterschiedliche Reflektionsverhalten der Glasfaser- und Karbongewebelagen kann der Benutzer erkennen, wann die eigentliche Bremsschicht abgerieben ist, so dass die Felge ausgetauscht werden muss.

Vorzugsweise sind zwei Felgenbettringe vorgesehen, die nacheinander eingelegt werden, wobei insbesondere nach dem Einlegen der zwei Felgenbettringe zwischen die beiden Felgenbettringe ein Spreizring eingeführt wird, um das Material in dem Bereich der oberen Felgenflanken und der Felgenhörner seitlich zu verpressen. Durch den aufgebrachten Druck verteilt sich das Material entsprechend und die im Gewebe enthaltene Luft wird durch das flüssige Harz ausgepresst.

In bevorzugten Ausgestaltungen sind die Felgenhörner jeweils Teil der Felgenflanken, und zwar jeweils der radial äußere Teil der Felgenflanken, an denen auf der Außenseite die Bremsflächen vorgesehen sind.

Das Entnehmen der Felge aus dem Werkzeug erfolgt insbesondere nach einem vorgeschalteten Abkühlungsschritt.

In einer bevorzugten Weiterbildung der Erfindung besteht die Grundform des Werkzeugs insbesondere aus zwei Hälften, welche vor dem Einlegen des ersten Laminatbandes miteinander verbunden werden. Insbesondere werden die beiden axial aneinander liegenden Hälften miteinander verschraubt.

In einer vorteilhaften Weiterbildung der Erfindung wird zentrisch auf das erste Laminatband der Länge nach wenigstens ein Faserbündel oder ein Gewebestreifen aufgelegt, um damit den späteren Felgenboden zu verstärken.

Dadurch wird eine homogenere Herstellung der Felge ermöglicht, da eine zuverlässigere und verzugfreie Positionierung des ersten Laminatbandes auf dem Werkzeuggrund ermöglicht wird, und da außerdem über das Faserbündel bzw. den Gewebestreifen eine Verstärkung des Felgenbodens für die spätere Aufnahme der Speichennippel erreicht wird.

Das Faserbündel verstärkt dabei zusätzlich die Wirkung, die auch schon durch die zweite Anzahl der Streifen mit erzielt wird, insbesondere wenn die Breite der zweiten Anzahl von Streifen geringer ist als die Breite der ersten Anzahl, was vorzugsweise der Fall ist.

In weiteren Ausgestaltungen ist es auch möglich, das neben der ersten Anzahl von Streifen und der zweiten Anzahl von Streifen auch noch eine dritte, vierte oder fünfte Anzahl von Streifen aufeinander gelegt werden, um das erste oder zweite mehrschichtige Laminatband zu bilden. So kann durch Verwendung einiger schmaler Streifen der radial innere Bereich des Felgenbodens verstärkt werden und eine verzugsfreie Positionierung des Laminatbandes im Werkzeuggrund erreicht werden, wodurch die Qualität und Reproduzierbarkeit der erfindungsgemäß hergestellten Felgen erheblich ansteigt.

Bei konventionellen Herstellungsverfahren wird durch das Drappieren der Schichten innerhalb der Grundform oftmals eine lokale Verzerrung der vorgefertigten Gewebe bewirkt, was zu lokalen Schwächungen der Felge führt, wodurch die Belastbarkeit lokal sinkt und die Reproduzierbarkeit der Herstellung und die Qualität abnimmt.

In bevorzugten Weiterbildungen der Erfindung wird ein Faserbündel mit parallel ausgerichteten Fasern bzw. ein Roving eingesetzt. Dadurch wird im zentrischen Bereich der Felge an dem radial innen liegenden Ende des Felgenbodens eine genaue Positionierung des Laminatbandes erreicht.

In anderen bevorzugten Ausgestaltungen wird ein Faserbündel aus verdrillten Einzelfasern oder ein Fasergeflecht eingesetzt. Auch damit ist eine zuverlässige und besonders reproduzierbare Herstellung der Felge möglich.

Gemäß einer bevorzugten Weiterbildung der Erfindung wird bei dem erfindungsgemäßen Verfahren vor dem Einlegen des zweiten Laminatbandes wenigstens ein weiterer Streifen des Fasergewebes aufgelegt, um den Felgenboden zu verstärken. Diese Weiterbildung kann sowohl Anwendung finden, wenn ein Faserbündel in einem zentralen Bereich des ersten Laminatbandes eingesetzt wird, als auch, wenn kein separates Faserbündel aufgelegt wird. In allen Fällen verstärkt ein weiterer Streifen des Fasergewebes den Felgenboden. Um eine weitere Verstärkung des Felgenbodens zu erzielen, können auch mehr als ein oder zwei Streifen des Fasergewerbes aufgelegt werden, z.B. können 3, 4, 5, 6 oder auch 10 oder 20 oder noch mehr Streifen eingesetzt werden.

In einer vorteilhaften Ausgestaltung des erfindungsgemäßen Verfahrens werden die Bauteile der Grundform zunächst miteinander verbunden und anschließend wird auf die formgebende Oberfläche ein Trennmittel aufgetragen, um ein Festbacken der herzustellenden Felge an der Grundform bzw. an dem Werkzeug zu verhindern.

Vorteilhafterweise wird vor dem Aufbringen des Aussenringes das radial überstehende Material entfernt. Dabei wird insbesondere das über die Grundform und den Spreizring und die Felgenbettringe radial nach außen stehende Material abgeschnitten.

In einer Weiterbildung der Erfindung wird das Material im Bereich der Felgenhörner verpresst, was insbesondere durch zwei radial nach innen ragende Stege des Außenringes erzielt wird, die in den Bereich der Felgenhörner hineinragen und das Material dort verdichten und so bewirken, dass die Form der Felgenhörner nicht nachgearbeitet werden muss.

Als Kern kann auch ein verschlossener Folienschlauch verwendet werden, der über einen Fluidanschluss verfügt, über den bei dem Aufheizen bzw. Temperieren des Werkzeugs der Innendruck in dem Folienschlauch erhöht wird. Der Druck im Folienschlauch wird erst nach der Montage des Aussenrings erhöht, wodurch die Carbongewebelagen der beiden Laminatbänder seitlich an die Formkontur der Grundform des Werkzeugs und an die innere Kontur der Grundform angepresst werden.

In einer bevorzugten Weiterbildung der Erfindung wird das Werkzeug über integrierte Kanäle durch wenigstens ein Fluid temperiert, wobei je nach Bedarf aufgeheizt und/oder gekühlt werden kann. Wird das Werkzeug über ein flüssiges Fluid wie z.B. Öl oder Wasser aufgeheizt und/oder gekühlt, so kann eine besonders schnelle Aufheizung und eine besonders schnelle Abkühlung der Grundform erzielt werden. Neben dem Temperieren über integrierte Kanäle ist es auch möglich, eine elektrische Heizung über z.B. Widerstandsdrähte vorzusehen.

Zum Aufheizen eignet sich, insbesondere, wenn die angestrebte Aufheiztemperatur weit über 100 Grad Celsius beträgt, die Verwendung eines Öls, während das Werkzeug vorzugsweise über Wasser durchströmte Kanäle gekühlt wird. Das ist besonders vorteilhaft, da darüber eine effektive und sehr schnelle Kühlung erzielbar ist. Das ist besonders vorteilhaft, da aufgrund des hohen Anteils an Handarbeit die Herstellkosten wesentlich auch durch den Zeitfaktor beeinflusst werden. Durch die Abkühlung über integrierte Kanäle kann ein erheblicher Teil der Zeit eingespart werden, der für die Bearbeitung einer Felge reserviert werden muss, da die Abkühlung innerhalb einiger weniger Minuten erfolgen kann.

In einer besonders bevorzugten Weiterbildung der Erfindung wird an einem radial äußeren Bereich der formgebenden Oberfläche das Werkzeug mit einer Keramikteilchen umfassenden Schicht versehen, um diese Schicht bei der Aushärtung der Felge mit den Felgenflanken fest zu verbinden, so dass die als Bremsflächen dienenden Felgenflanken mit einer speziellen Bremsschicht aus Keramikteilchen oder dergleichen versehen werden. Unterhalb der Bremsschicht wird insbesondere eine schon zuvor erwähnte Indikatorschicht angeordnet.

In anderen Ausgestaltungen ist es ebenfalls möglich, eine speziell mit Keramikteilchen versehene Schicht auf die beiden seitlichen Bereiche des ersten Laminatbandes aufzubringen, welche dann im Werkzeug mit den anderen Schichten der Felge fest verbunden wird.

In allen Ausgestaltungen der Erfindung wird vorzugsweise trockenes Carbongewebe eingesetzt, welches bei der Herstellung mit flüssigem Harz bestrichen wird, um die Verteilung des Harzes optimal zu beeinflussen. Möglich ist auch der Einsatz von vorimprägnierten Carbongewebe in Form von z.B. Pre-Pregs.

Vorzugsweise wird bei dem erfindungsgemäßen Verfahren wenigstens ein Quersteg zwischen Felgenbett und Felgenboden eingebracht.

In allen Weiterbildungen kann wenigstens eine Speichenlochverstärkungslage eingelegt werden, deren Form an die Speichenlöcher angepasst ist, indem an den Speichenlöchern z.B. ovale, runde, vier oder mehreckige Verstärkungsstellen vorgesehen sind, die durch dünne Stege oder dergleichen verbunden sind.

Vorteilhafterweise wird wenigstens eine Verschleißindikatorlage an den Felgenflanken eingesetzt, um das Ende der Lebensdauer anzuzeigen.

In allen Ausgestaltungen ist es ebenso möglich, dass wenigstens ein thermoplastisches Material eingesetzt wird. Thermoplastische Matrixmaterialien haben den Vorteil, dass sie nahezu unbegrenzt lagerfähig sind, bei hohen Temperaturen reversibel aufschmelzen und z.B. verschweißbar sind.

In anderen bevorzugten Ausgestaltungen der Erfindung besteht das Matrixmaterial wenigstens teilweise aus einem duroplastischem Material.

Die erfindungsgemäße Felge nach Anspruch 17 ist insbesondere für den Einsatz an Fahrrädern geeignet und umfasst ein Felgenbett, einen Felgenboden, seitliche Felgenflanken und Felgenhörner, wobei die Felge nach einer der zuvor beschriebenen Herstellungsvarianten hergestellt wurde.

Eine weitere erfindungsgemäße Vorrichtung zur Herstellung einer Felge aus Gewebeschichten aus faserverstärktem Material ist insbesondere zur Herstellung von Fahrradfelgen für Fahrräder geeignet und weist ein Werkzeug auf. Die Fahrradfelge umfasst ein Felgenbett, Felgenflanken und daran vorgesehene Felgenhörner, zwischen denen ein Reifen aufnehmbar ist. Das Werkzeug umfasst eine Grundform, welche eine ringförmige Nut aufweist, welche die Form der Außenoberfläche des Felgenbodens und der Felgenflanken aufweist. Zur Formgebung des Felgenbettes und der Felgenhörner sind wenigstens zwei Felgenbettringe und wenigstens ein Spreizring vorgesehen. Der Spreizring ist erfindungsgemäß keilförmig ausgebildet und wird zwischen den Felgenbettringen angeordnet, um die Gewebeschichten wenigstens im Bereich der Felgenhörner zu verpressen.

Der Spreizring verläuft insbesondere in radialer Richtung keilförmig, wobei sich der Keil radial nach innen verjüngt. Vorzugsweise ist der Spreizring etwa symmetrisch zur Spreizringebene ausgebildet und die Neigungswinkel der Keilflächen sind auf beiden Seiten etwa gleich. Vorzugsweise sind die an der keilförmigen Fläche des Spreizrings anliegenden Felgenbettringe entsprechend keilförmig gestaltet, sodass sich die aneinanderliegenden keilförmigen Flächen aufheben. Durch einen radialen Druck auf den Spreizring werden dann die Felgenbettringe axial auseinander gedrückt, sodass die Bereiche der Felgenhörner bzw. Felgenflanken verpresst werden.

Eine weitere erfindungsgemäße Vorrichtung dient zur Herstellung einer Fahrradkomponente aus Gewebeschichten aus faserverstärktem Material und umfasst eine Fahrradkomponentenform. Die herzustellende Fahrradkomponente weist einen Komponentenkörper auf, der aus mehreren übereinander geschichteten Gewebeschichten besteht und der an die innere Form der Fahrradkomponentenform angepasst ist. Erfindungsgemäß ist die Fahrradkomponentenform dafür vorgesehen, eine Mehrzahl von Gewebeschichten aus faserverstärktem Material aufzunehmen, und die Fahrradkomponentenform weist wenigstens einen Kanal auf, um die Fahrradkomponentenform über ein Fluid zu temperieren, welches den Kanal durchströmt.

Vorzugsweise dient eine solche erfindungsgemäße Vorrichtung und die Fahrradkomponentenform zur Herstellung einer Fahrradfelge oder einer Federgabel oder zur Herstellung anderer Fahrradteile.

In Weiterbildungen erfindungsgemäßer Vorrichtungen ist wenigstens ein Elektroheizelement an dem Werkzeug vorgesehen.

Bei Aufheizung oder Abkühlung über ein Fluid ist vorzugsweise eine Flüssigkeit vorgesehen.

Vorzugsweise besteht der Spreizring im Wesentlichen aus dem gleichen Material wie die Grundform. Dadurch werden während der Aushärtung im wesentlichen gleiche Druckbedingungen herrschen. Wichtig ist insofern ein etwa gleicher thermischer Ausdehnungskoeffizient.

Weitere Vorteile und Merkmale ergeben sich aus den Ausführungsbeispielen, die nun mit Bezug auf die beiliegenden Figuren erläutert werden.

In den Figuren zeigen:
- Fig. 1: eine erfindungsgemäße Felge im Schnitt;
- Fig. 2: eine weitere erfindungsgemäße Felge im Schnitt;
- Fig. 3: eine dritte Ausführungsform der erfindungsgemäßen Felge;
- Fig. 4: eine alternative Ausgestaltung der Felgenhörner;
- Fig. 5: eine weitere Ausführungsmöglichkeit der Felgenhörner;
- Fig. 6: noch eine Ausgestaltung der Felgenhörner;
- Fig. 7: die erfindungsgemäße Vorrichtung zur Herstellung einer erfindungsgemäßen Felge im Schnitt;
- Fig. 8: die unterschiedlichen Lagen des ersten und des zweiten Laminatbandes; und
- Fig. 9: eine Variante der erfindungsgemäßen Felge im Schnitt.

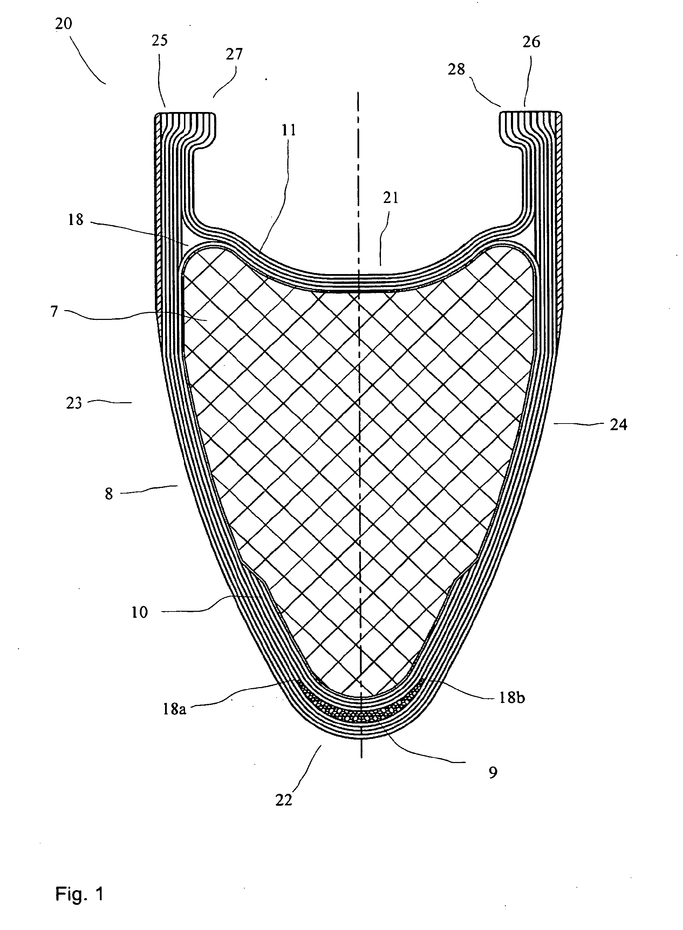

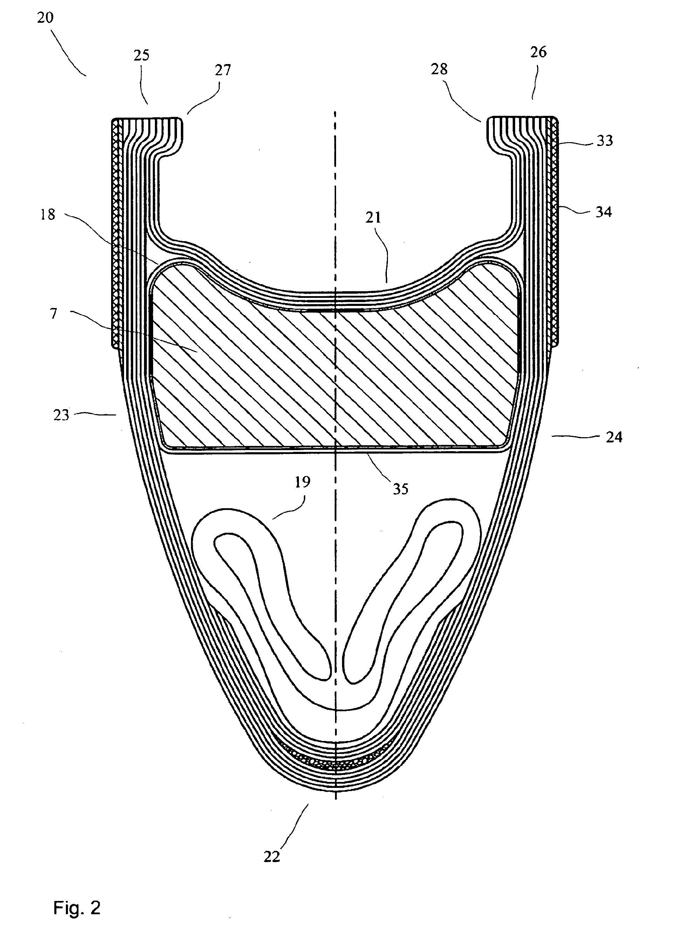

In Figur 1 ist ein erstes Ausführungsbeispiel der Erfindung dargestellt, während in den Figuren 2, 3 und 9 abgewandelte Varianten dargestellt ist.

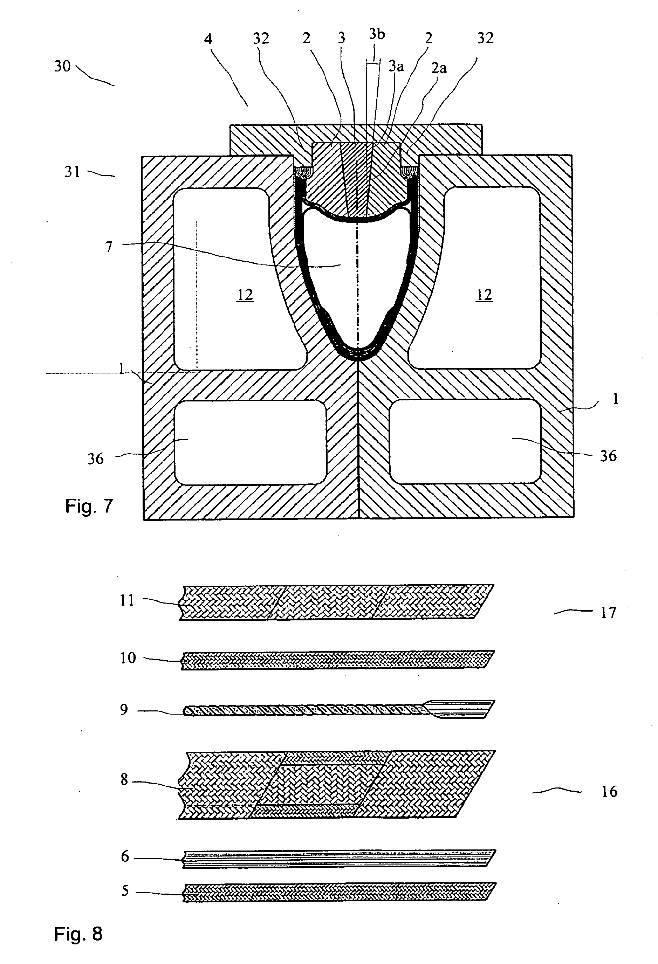

Die in Figur 7 im Schnitt dargestellte Vorrichtung 30 dient zur Herstellung einer erfindungsgemäßen Felge 20 und umfasst eine Grundform 31, die zwei Hälften 1 umfasst, die zur Herstellung einer erfindungsgemäßen Felge 20 axial voreinander gebracht und miteinander verschraubt werden. Anschließend wird die formgebende Oberfläche 32 des Werkzeugs 30 mit einem Trennmittel 13 versehen, um ein Anhaften von Felgenteilen an der Werkzeugform zu verhindern.

Danach wird Carbongewebe in die in Fig. 8 dargestellten einzelnen Streifen 5, 8 etc. verschiedener Größe geschnitten, sofern das nicht im Vorfeld schon durchgeführt wurde. Die einzelnen Lagen des Carbongewebes werden sorgfältig nach einem definierten Muster aufeinander gelegt, wobei die einzelnen Lagen auf der Unterlage genau zueinander ausgerichtet werden.

Das erste Laminatband 16 wird aus verschiedenen Schichten gebildet, die hier im Ausführungsbeispiel zunächst eine schmale Schicht 5 aus dem Carbonfasermaterial umfasst, die auf die Unterlage aufgelegt wird. Die Lage 5 kann z.B. eine Breite von 10 mm aufweisen. Anschließend kann eine weitere Lage von z.B. etwas größerer Breite (z.B. 20 mm) auf die erste Lage aufgebracht werden oder es wird ein Carbontape 6, das aus einer Vielzahl von parallel angeordneten Carbonfasern besteht, auf die schon vorhandenen Lagen aufgelegt, um eine ungewollte Längung des Laminatbandes 16 bei der weiteren Verarbeitung zu vermeiden. Die Lage 6 wird im bestimmungsgemäßen Zusammenbau der Felge im Felgenboden angeordnet und verstärkt dort den Bodenbereich 22. Durch die Lage 6 wird eine zuverlässige und verzugfreie Positionierung des Laminatbandes 16 auf der radial inneren Werkzeugfläche gewährleistet.

Nach Auflegen einer vorbestimmten Anzahl weiterer Lagen 8 ist das erste Laminatband 16 fertiggestellt und kann in die Grundform 31 der Vorrichtung bzw. des Werkzeuges 30 zur Herstellung der Felge 20 eingeführt werden.

Doch zunächst wird das Laminatband 8 V-förmig vorgeformt, wodurch die Steifigkeit gegen Verbiegen etc. erhöht wird. Das V-förmige erste Laminatband 16 wird in das Werkzeug 30 eingebracht und dort mit Hilfswerkzeugen angepresst. Dazu kann die Form 31 drehbar ausgeführt sein.

Auf das erste Laminatband 16 kann eine Schnur 9 bzw. ein Faserbündel aufgelegt werden, welches neben der Verstärkung des Felgenbodens 22 für die spätere Aufnahme der Speichennippel auch die zuverlässige und verzugfreie Positionierung des Laminatbandes 16 auf dem Grund des Werkzeugbodens gewährleistet, sodass insgesamt die Reproduzierbarkeit und Qualität der hergestellten Felgen zunimmt.

Auf die Schnur 9 kann noch eine oder mehrere Lagen eines weiteren Carbongewebes aufgelegt werden, um den Felgenboden 22 weiter zu verstärken.

Aus weiteren zugeschnittenen Streifen des Carbongewebes wird ein zweites, schmaleres Laminatband vorlaminiert und U-förmig vorgeformt. Dieses zweite schmalere Laminatband 17 bildet das Felgenbett 21 und einen Teil der Felgenhörner 25, 26 nämlich dort die innenliegenden Lagen.

Die in Figur 1 dargestellte erfindungsgemäße Felge 20 weist einen Kern 7 auf, der von einer Kernlage 18 umgeben ist, die insbesondere als Gewebeschlauch ausgeführt ist. Möglich ist auch, dass eine Gewebelage als Kernlage 18 verwendet wird, die auf den ausgeformten Kern 7 aufgewickelt oder aufgelegt wird. Die Ende 18a und 18b der Kernlage können im Bereich der Verstärkungsfasern 9 vorgesehen sein.

Der Kern 7 kann z.B. aus einem eutektischen Metall bestehen, welches in eine andere Rohform gegossen wurde, um dort abzukühlen und zu erstarren. Der z.B. geschlitzte Kernring oder der aus zwei Teilen bestehende Kern 7 kann von einer zusätzlichen Schutzschicht umgeben sein, wie z.B. von einer Kunststofffolie.

Der passend profilierte Kern wird in die Form eingelegt und auf den Kern 7 wird das zweite Laminatband 17 aufgelegt, welches das Felgenbett und einen Teil der Flanken bildet. Insbesondere werden die radial nach innen stehenden Teile 27, 28 der Felgenhörner 25 und 26durch die Lagen des zweiten Laminatbands 17 gebildet. Die an den Felgenhörnern vorliegenden Lagen werden in der Herstellform 30 in Richtung auf den Felgenboden zugestaucht, sodass sich bei dieser Ausführungsform etwa der in Figur 1 dargestellte Verlauf der Lagen ergibt.

Nach der Aufheizung und Aushärtung der Felge kann der Kern 7 wieder entfernt werden, indem das bei den entsprechenden Temperaturen eutektische Kernmaterial aufgeschmolzen wird und insbesondere durch das Ventilloch die Felge wieder verlässt. Der den Kern 7 umgebende Schutzmantel kann anschließend aus der Felge herausgezogen werden, sodass der Kern 7 rückstandslos entfernt wird. Das aufgefangene Material wird anschließend wieder zu einem neuen Kern gegossen, der anschließend wieder verwendet wird.

Alternativ dazu kann der Kern 7 auch aus einem aufgeschäumten Kunststoff wie z.B. aufgeschäumtes Polystyrol bestehen, welches entweder in der Felge verbleibt oder aber durch ein Lösungsmittel herausgewaschen wird, sodass auch in diesem Fall der Kern rückstandslos entfernt werden kann. Um die Carbonfelge vor dem Lösungsmittel zu schützen, kann der Schaumstoffkern z.B. auch von einer Schutzschicht umgeben sein.

Als Kernmaterial können auch sonstige Materialien verwendet werden, wie z.B. wasserlösliche Polymere, die nach der Aushärtung der Felge wieder herausgewaschen werden.

Bei der Ausführungsform nach Figur 2 wird ein den Hohlraum teilweise ausfüllender fester Kern 7 eingesetzt, der von einem Gewebeschlauch oder einer Kernlage 18 umgeben ist. Dadurch wird im unteren Bereich des Kerns, hier im Ausführungsbeispiel etwa auf halber Höhe der Felge, eine Querwand 35 in die Felge eingefügt, die erheblich zur seitlichen Stabilisierung der Felge beiträgt. Insbesondere bei den beim Bremsen auftretenden Kräften und bei den durch die Drahtreifen auf die Felgenhörner wirkenden Hebelkräften wird so ein erheblicher Beitrag zur Stabilität der Felge geleistet.

Um die unterhalb des Kerns 7 im Bereich des Felgenbodens vorgesehenen Lagen dicht zu verpressen ist hier im Ausführungsbeispiel ein füllbarer Folienschlauch 19 vorgesehen, der flach in die Form eingelegt wird und erst gefüllt wird, nachdem die Form verschlossen wurde, sodass die Querwand 35 zunächst oberhalb des schlaffen Sacks 7 angeordnet ist und diesen nicht berührt.

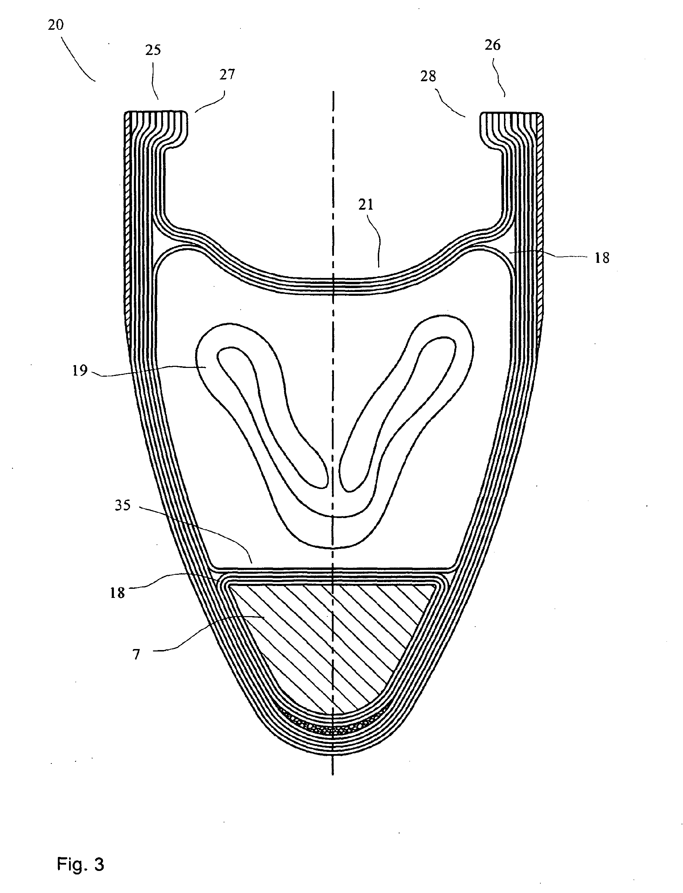

Bei dem in Figur 3 dargestellten Ausführungsbeispiel wird im Bereich des Felgenbodens ein fester Kern 7 vorgesehen, der von einer oder mehreren Lagen 18 umgeben ist. Die Lagen 18 können als Gewebeschläuche ausgeführt sein oder um den Kern 7 herumgewickelt oder gelegt werden.

Oberhalb des Kerns 7 wird der restliche Freiraum von einer weiteren Gewebelage oder einem weiteren Gewebeschlauch 18 ausgefüllt, die bzw. der durch einen füllbaren Schlauch 19 gegen die äußere Wandung gedrückt wird. Der füllbare Schlauch 19 wird erst gefüllt, wenn die Form verschlossen wird. Auch hier bilden die einzelnen Querwände 35 eine seitliche Versteifung der Felge, sodass diese die beim Bremsen auftretenden Belastungen und die durch den Innendruck der Drahtreifen auf die Felgenhörner wirkenden Biegemomente besser ableiten kann.

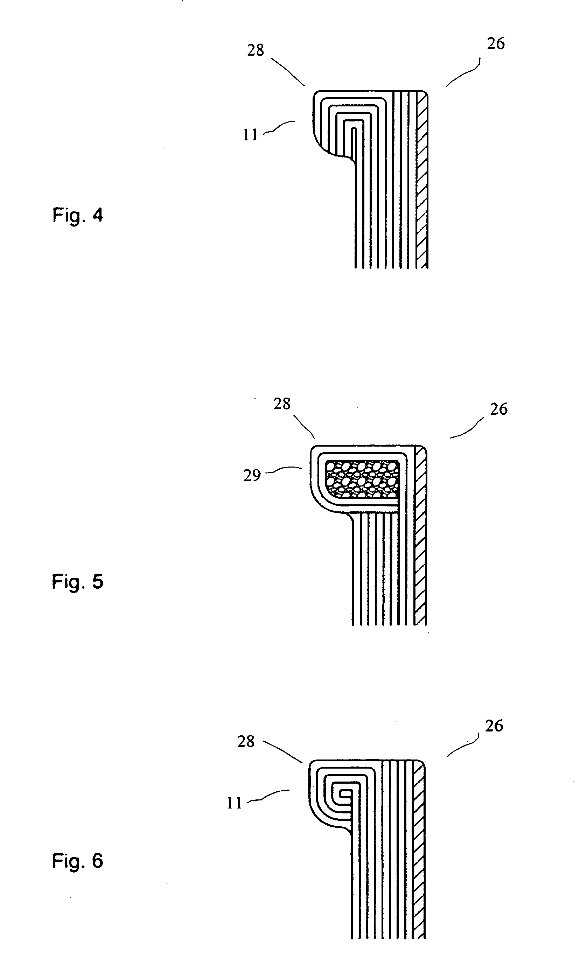

In Figur 4 ist eine alternative Gestaltung der Felgenhörner dargestellt. Dort werden die äußeren Enden des zweiten Laminatbandes 17 um 180 Grad umgelegt und bilden so die nach innen vorstehenden Vorsprünge 28 der Felgenhörner 26.

Alternativ dazu können auch separate Hornbänder 29 eingesetzt werden, wie es in Figur 5 dargestellt ist. Solche Hornbänder 29 können aus unidirektionalen Verstärkungsfasern bestehen, die von einem Gewebeschlauch oder eine Gewebelage umgeben sind. Die Hornbänder ermöglichen eine besonders hohe Belastung in radialer Richtung.

Bei der in Figur 6 gezeigten Ausgestaltung der Felgenhörner 26 werden die äußeren Enden des zweiten Laminatbandes 17 eingewickelt oder aufgerollt, um die nach innen vorstehenden Vorsprünge 28 der Felgenhörner 26 zu bilden, die abgerundet nach innen ansteigen.

In allen Fällen wird die Gestalt der Felgenhörner in der Herstellungsform festgelegt, sodass ein aufwändiges Kürzen nicht erforderlich ist.

Durch das Verschließen der Form mit dem Außenring 4 werden in den Ausführungsbeispielen gemäß der Figur 1, 2 und 3 die Lagen im Bereich der Felgenhörner 25, 26 verpresst, sodass der Verlauf der Lagen im Querschnitt etwa dem Verlauf entspricht wie er in den Figuren 1, 2 und 3 dargestellt ist.

Alternativ dazu kann auch die Gestaltung der Felgenhörner gemäß Figur 4 erfolgen, wo bei dem zweiten Laminatband der Rand der Lagen vor dem Einlegen in die Form umgelegt wird, um die nach innen überstehenden Teile 27 und 28 der Felgenhörner zu bilden.

Die zwei vorher mit dem Trennmittel behandelten Felgenbettreifen 2 werden in die Form über das zweite Laminatgelege 17 eingezogen und anschließend wird der Spreizring 3 zwischen die beiden Felgenbettreifen 2 geklemmt. Dabei bewirkt der keilförmige Spreizring 3, dass die Felgenbettringe 2 auseinander gedrückt und die Schichten der Felgenflanken gegen die zwei Hälften 1 der Form 30 gepresst werden. Der Neigungswinkel der Seitenflächen 2a der Felgenbettringe 2 ist dabei entsprechend an den Neigungswinkel 3b der Seitenflächen 3a des Spreizringes 3 angepasst. Der Neigungswinkel 3b ist grundsätzlich beliebig und liegt insbesondere zwischen etwa 2° und 30°, vorzugsweise zwischen 2° und 15°. Bei der Klemmung eventuell austretendes Material wird abgeschnitten.

Anschließend wird der Aussenring 4 montiert, wobei die zwei innenliegenden Stege 32 des Aussenrings 4 im Bereich der Felgenhörner 25, 26 das Material verpressen. Die dort vorhandenen Gewebestreifen werden gegebenenfalls etwas gestaucht.

Durch das Klemmen des Spreizrings werden die Carbongewebelagen bzw. die beiden Laminatbänder 16 und 17 seitlich an die Konturform des Werkzeugs bzw. an die Innenseiten der Felgenreifens gepresst.

Die komplette Einheit aus Werkzeug 30 und den darin enthaltenen Carbonfaserschichten werden einem Heiz- und Kühlzyklus unterzogen, wodurch eine Aushärtung des Carbongewebes bewirkt wird. Nach dem Abkühlen der Felge 20 wird der Außenring 4 geöffnet und entfernt. Anschließend wird der Spreizring 3 entfernt und einer der beiden Felgenbettreifen 2 wird gegen die Profilmitte verschoben, wodurch er am Felgenhorn 25 oder 26 vorbei entfernt werden kann. Der zweite Felgenbettreifen 2 wird durch ein analoges Vorgehen entfernt.

Nach dem Aufschrauben können die zwei Formhälften 1 des Hauptwerkzeugs 30 geteilt und die Felge kann entnommen werden.

Die hergestellte Felge 20 umfasst ein Felgenbett 21, einen Felgenboden 22, Felgenflanken 23 und 24 und Felgenhörner 25 und 26 und besteht insgesamt aus einem Faserverbundwerkstoff. In der Schnittdarstellung nach Figur 1 sind im Bereich des Felgenbodens deutlich das Faserbündel 9 und die Verstärkungsstreifen 10 zur Verstärkung des Felgenbodens erkennbar. Als Verstärkungsfasern kommen insbesondere Carbonfasern in Betracht, es sind aber ebenso andere geeignete Fasermaterialien möglich, wie Glasfasern, Aramidfasern, Kevlarfasern und dergleichen mehr.

Ein erheblicher Vorteil ist, dass die Felgen nach der Entnahme aus der Form nur noch entgratet werden muss. Dabei werden die überstehenden Harzfedern an den Fügungsstellen der Formhälften 1 des Hauptwerkzeugs 30 entfernt. Eine aufwändige Nachbearbeitung, Kürzung oder Formgebung der Felgen ist nicht nötig. Die Oberfläche benötigt keine Lackierung oder sonstige Nacharbeitung.

Das Aufheizen und Abkühlen der Form erfolgt durch Beschickung der Kanäle 12 mit einem Fluid wie z.B. Öl oder dergleichen. Zur Abkühlung können die Kanäle 12 oder separate Kanäle 36 verwendet werden, die dann von Wasser oder von Ö1 durchströmt werden, um ein schnelles Abkühlen der Form zu bewirken.

Die in Figur 2 dargestellte Variante der erfindungsgemäßen Felge unterscheidet sich u.a. dadurch, dass im oberen Bereich der Felgenflanken an den Felgenhörnern auf den äußeren Seitenflächen noch jeweils eine Keramikbeschichtung 33 aufgebracht wird, die als Bremsfläche dient. Unterhalb der Keramikbeschichtung 33 ist eine Verschleißindikatorschicht 34 vorgesehen. Wenn die Keramikbeschichtung 33 verschlissen ist, wird die Verschleißindikatorschicht 34 sichtbar, so dass der Benutzer erkennt, dass die Felge das Ende der Lebensdauer erreicht hat.

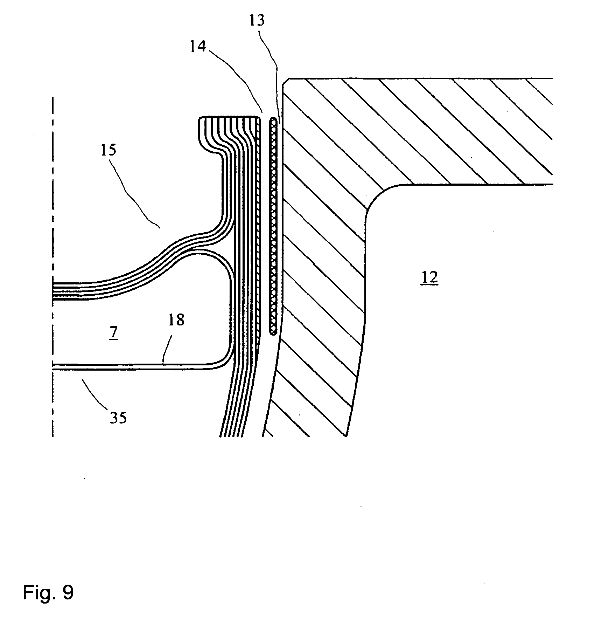

Bei der Ausführungsform nach Figur 9 wird die Grundform 31 mit einem Trennmittel 13 bestrichen und mit einer reibungsverstärkenden Schicht 14 versehen, welche die Bremsschicht bildet oder verstärkt. Unterhalb der Bremsschicht kann eine Verschleißindikatorschicht vorgesehen sein.

## Patentansprüche

1. Verfahren zur Herstellung einer Felge (20), insbesondere für Fahrräder, welche ein Felgenbett (21), einen Felgenboden (22) und das Felgenbett (21) und den Felgenboden (22) verbindende Felgenflanken (23, 24), sowie Felgenhörner (25, 26) umfasst, zwischen denen ein Reifen aufnehmbar ist, **dadurch gekennzeichnet, dass** es die folgenden Schritte umfasst:
Auflegen wenigstens einer ersten Anzahl von Streifen (5) eines Fasergewebe umfassenden Materials auf eine separate Unterlage, wobei die erste Anzahl von Streifen (5) eine erste Form und eine erste Breite und eine erste Länge aufweist, Auflegen wenigstens einer zweiten Anzahl von Streifen (6) des Fasergewebe umfassenden Materials auf die Unterlage, wobei die zweite Anzahl von Streifen (6) eine zweite Form aufweist, die von der ersten Form abweicht, um aus der ersten Anzahl (5) und wenigstens der zweiten Anzahl (6) der Streifen ein erstes mehrschichtiges Laminatband (16) zu bilden,
Herstellen eines zweiten mehrschichtigen Laminatbandes (17), welches schmaler als das erste Laminatband (16) ist,
Umformen des im Wesentlichen ersten Laminatbandes 16 zu einem V-förmigen Laminatband,
Einlegen des V-förmigen ersten Laminatbandes (16) entlang des Umfangs des inneren Teiles einer Grundform (31) eines Werkzeugs (30),
Auflegen eines Kerns (7) auf das erste Laminatband (16) in der Grundform (31),
Auflegen des zweiten Laminatbandes (17) auf den Kern (7),
Einlegen wenigstens eines ersten und wenigstens eines zweiten im Wesentlichen ringförmigen Felgenbettringes (2) von außen auf das zweite Laminatband (17), wobei die Felgenbettringe (2) an den Seiten an das zweite Laminatband (17) angrenzen,
Einführen eines Spreizringes (3) zwischen den Felgenbettringen (2), um das Material in der Region der oberen Felgenflanken (23, 24) und der Felgenhörner (25, 26) zu verpressen,
Aufbringen eines Außenringes (4),
Aufheizen des Werkzeugs (30) und Temperieren für eine vorbestimmte Zeitdauer bei vorbestimmten Temperaturbedingungen,
Entnahme der Felge (20).

2. Verfahren nach Anspruch 1, wobei die Grundform (31) aus zwei Hälften (1) besteht, welche vor Einlegen des ersten Laminatbandes (16) miteinander verbunden werden.

3. Verfahren nach Anspruch 1 oder 2, wobei zentrisch auf das erste Laminatband (16) der Länge nach ein Faserbündel (9) aufgelegt wird, um den Felgenboden (20) zu verstärken, welches insbesondere vor dem Einlegen verdrillt wird.

4. Verfahren nach einem der vorhergehenden Ansprüche, wobei vor dem Einlegen des zweiten Laminatbandes (17) wenigstens ein weiterer Streifen des Fasergewebes aufgelegt wird, um den Felgenboden (22) zu verstärken.

5. Verfahren nach einem der vorhergehenden Ansprüche, wobei vor dem Aufbringen des Außenringes (4) das radial überstehende Material entfernt wird.

6. Verfahren nach einem der vorhergehenden Ansprüche, wobei zwei radial innenliegende Stege (32) des Außenringes (4) das Material im Bereich der Felgenhörner (25, 26) verpressen.

7. Verfahren nach einem der vorhergehenden Ansprüche, wobei der Kern (7) mit einem Fluid gefüllt ist.

8. Verfahren nach einem der vorhergehenden Ansprüche, wobei das Werkzeug (30) über integrierte Kanäle (12) durch wenigstens ein Fluid temperiert wird.

9. Verfahren nach einem der vorhergehenden Ansprüche, wobei an einem radial äußeren Bereich der formgebenden Oberfläche das Werkzeug (30) mit einer Keramikteilchen umfassenden Schicht (14) versehen wird, um wenigstens einen Teil der als Bremsflächen dienenden Felgenflanken (23,24) mit einer Bremsschicht (33) aus Keramikteilchen zu versehen.

10. Verfahren nach einem der vorhergehenden Ansprüche, wobei wenigstens ein Quersteg (35) zwischen Felgenbett (21) und Felgenboden (22) eingebracht wird.

11. Verfahren nach einem der vorhergehenden Ansprüche, wobei wenigstens eine Speichenlochverstärkungslage (10) eingelegt und/oder wenigstens eine Verschleißindikatorlage (34) an den Felgenflanken eingesetzt wird.

12. Verfahren nach einem der vorhergehenden Ansprüche, wobei wenigstens ein Kern (7) aus einem eutektischen Metall verwendet und/oder ausgewaschen oder aufgelöst wird.

13. Verfahren nach einem der vorhergehenden Ansprüche, wobei wenigstens ein Kern (7) mit Wasser oder Öl gefüllt ist und mit einem Druckausgleichsventil verbunden ist, um beim Aufheizen den Druck auszugleichen.

14. Vorrichtung zur Herstellung einer Fahrradfelge (20) aus Gewebeschichten aus faserverstärktem Material, insbesondere für Fahrräder wobei die Fahrradfelge (20) ein Felgenbett (21), Felgenflanken (23, 24) und daran vorgesehene Felgenhörner (25, 26) umfasst, zwischen denen ein Reifen aufnehmbar ist, wobei das Werkzeug (30) eine Grundform (31) umfasst, welche eine ringförmige Nut aufweist welche die Form der Außenoberfläche des Felgenbodens (22) und der Felgenflanken (23,24) aufweist,
**dadurch gekennzeichnet,**
**dass** zur Formgebung des Felgenbettes (22) und der Felgenhörner (25, 26) wenigstens zwei Felgenbettringe (2) und wenigstens ein Spreizring (3) vorgesehen sind, wobei der Spreizring (3) keilförmig ausgebildet ist und zwischen den Felgenbettringen (2) angeordnet wird, um die Gewebeschichten wenigstens im Bereich der Felgenhörner (25, 26) zu verpressen.

15. Vorrichtung nach dem vorhergehenden Anspruch, wobei der Spreizring (3) aus dem gleichen Material wie die Grundform (31) besteht, wodurch während der Aushärtung im wesentlichen gleiche Druckbedingungen herrschen.

## Claims

1. A method of producing a rim (20) in particular for bicycles comprising, a rim well (21), a rim base (22) and rim flanks (23, 24), connecting the rim well (21) with the rim base (22), and rim flanges (25, 26) between which a tire can be accommodated, **characterized in that** it comprises the following steps:
positioning on a separate support at least a first quantity of strips (5) of a woven-fiber including material which first quantity of strips (5) comprises a first shape and a first width and a first length,
positioning on the support at least a second quantity of strips (6) of the woven-fiber including material which second quantity of strips (6) has a second shape different from the first shape, to form from the first quantity (5) and at least the second quantity of strips (6), a first multi-layer laminated band (16),
producing a second multi-layer laminated band (17) which is narrower than the first laminated band (16),
re-shaping the substantially first laminated band (16) into a V-shaped laminated band,
inserting the V-shaped first laminated band (16) along the periphery of the inner part of a basic mold (31) of a mold (30),
positioning a core (7) on the first laminated band (16) in the basic mold (31),
positioning the second laminated band (17) on the core (7),
inserting from outside at least a first and at least a second substantially annular rim well ring (2) on the second laminated band (17), which rim well rings (2) abut the sides of the second laminated band (17),
inserting a spreader ring (3) between the rim well rings (2) to pressure-bond the material in the region of the upper rim flanks (23, 24) and the rim flanges (25, 26),
positioning an external ring (4),
heating up the mold (30) and temperature-controlling for a predetermined duration at predetermined temperature conditions,
removing the rim (20).

2. The method according to claim 1 wherein the basic mold (31) consists of two halves (1) which are connected with one another before the first laminated band (16) is inserted.

3. The method according to claim 1 or 2 wherein a fiber strand (9) is lengthwise centered on the first laminated band (16) to reinforce the rim base (20) and which is in particular twisted before positioning.

4. The method according to any of the preceding claims wherein before inserting the second laminated band (17) at least one more strip of the woven fiber is positioned to reinforce the rim base (22).

5. The method according to any of the preceding claims wherein before applying the external ring (4) any radially protruding material is removed.

6. The method according to any of the preceding claims wherein two radially inwardly webs (32) of the external ring (4) pressure-bond the material in the region of the rim flanges (25, 26).

7. The method according to any of the preceding claims wherein the core (7) is filled with a fluid.

8. The method according to any of the preceding claims wherein the mold (30) is temperature-controlled through integrated channels (12) by means of at least one fluid.

9. The method according to any of the preceding claims wherein the mold (30) is coated in a material (14) comprising ceramic particles in a radially outwardly region of the shaping surface to provide at least part of the rim flanks (23, 24) serving as braking surfaces with a braking coating (33) of ceramic particles.

10. The method according to any of the preceding claims wherein at least one transverse web (35) is inserted between the rim well (21) and the rim base (22).

11. The method according to any of the preceding claims wherein at least one spoke hole reinforcing layer (10) is inserted and/or at least one tread wear indicator layer (34) is inserted at the rim flanks.

12. The method according to any of the preceding claims wherein at least one core (7) of a eutectic metal is employed and/or flushed out or dissolved.

13. The method according to any of the preceding claims wherein at least one core (7) is filled with water or oil and connected with a pressure-compensating valve to equalize the pressure during heating.

14. An apparatus for producing a bicycle rim (20) from fabric layers of a fiber-reinforced material in particular for bicycles, said bicycle rim (20) comprising a rim well (21), rim flanks (23, 24) and rim flanges (25, 26) provided thereat between which a tire can be accommodated wherein the mold (30) comprises a basic mold (31) having an annular groove which is in the shape of the external surface of the rim base (22) and the rim flanks (23, 24), **characterized in that** for shaping the rim well (22) and the rim flanges (25, 26), at least two rim well rings (2) and at least one spreader ring (3) are provided which spreader ring (3) is configured wedge-shaped and is arranged between the rim well rings (2) to pressure-bond the fabric layers at least in the region of the rim flanges (25, 26).

15. The apparatus according to the preceding claim wherein the spreader ring (3) consists of the same material as the basic mold (31) such that during curing substantially equal pressure conditions will prevail.

## Revendications

1. Procédé de construction d'une jante (20) particulièrement pour bicyclettes, comprenant un creux de jante (21), un fond de jante (22) et des flancs de jante (23, 24) reliant le creux de jante (21) au fond de jante (22), ainsi que des rebords de jante (25, 26) entre lesquels peut être inséré un pneumatique, **caractérisé en ce qu'**il comprend les étapes suivantes :
La pose, sur un support séparé, d'au moins une première série de bandes (5) d'un matériau comprenant un tissu de fibres, la première série de bandes (5) présentant une première forme, une première largeur ainsi qu'une première longueur ; la pose, sur le support, d'au moins une deuxième série de bandes (6) du matériau comprenant un tissu de fibres, la deuxième série de bandes présentant une deuxième forme différente de la première forme, afin de former à partir de la première série (5) et d'au moins la deuxième série (6) de bandes un premier bandeau de stratifié multi-couche (16),
La fabrication d'un deuxième bandeau de stratifié multi-couche (17) plus étroit que le premier bandeau de stratifié (16),
La mise en forme principalement du premier bandeau de stratifié (16) en un bandeau de stratifié en V,
La mise en place du premier bandeau de stratifié en V (16) le long du périmètre de la partie intérieure d'un moule (31) d'un outil (30),
La pose d'un noyau (7) sur le premier bandeau de stratifié (16) dans le moule (31),
La pose du deuxième bandeau de stratifié (17) sur le noyau (7),
La mise en place d'au moins une première bague de creux de jante (2) et d'au moins une deuxième bague de creux de jante (2) principalement de forme circulaire, de l'extérieur et sur le deuxième bandeau de stratifié (17), les bagues de creux de jante (2) étant contigues, au niveau des extrémités, au deuxième bandeau de stratifié (17),
L'insertion d'une bague d'écartement (3) entre les bagues de creux de jante (2) pour compresser le matériau au niveau des flancs de jante supérieurs (23, 24) et des rebords de jante (25, 26),
Le montage d'une bague extérieure (4),
La chauffe de l'outil (30) et la thermorégulation pour une durée prédéfinie dans des conditions thermiques prédéfinies,
L'extraction de la jante (20).

2. Procédé selon la revendication 1, le moule (31) étant composé de deux moitiés (1) qui sont reliées l'une à l'autre avant la mise en place du premier bandeau de stratifié (16) .

3. Procédé selon la revendication 1 ou 2, un faisceau de fibres (9) étant posé au centre et dans le sens de la longueur sur le premier bandeau de stratifié (16) pour procéder au renforcement du fond de jante (22), lequel est torsadé en particulier avant d'être posé.

4. Procédé selon l'une quelconque des revendications précédentes, au moins une autre bande de tissu de fibres étant mise en place avant la pose du deuxième bandeau de stratifié (17) pour renforcer le fond de jante (22).

5. Procédé selon l'une quelconque des revendications précédentes, le matériau dépassant radialement étant éliminé avant que la bague extérieure (4) ne soit montée.

6. Procédé selon l'une quelconque des revendications précédentes, deux âmes apposées radialement sur la face interne (32) de la bague extérieure (4) compressant le matériau au niveau des rebords de jante (25, 26).

7. Procédé selon l'une quelconque des revendications précédentes, le noyau (7) étant rempli d'un fluide.

8. Procédé selon l'une quelconque des revendications précédentes, l'outil (30) étant tempéré par au moins un fluide à travers des canaux intégrés (12).

9. Procédé selon l'une quelconque des revendications précédentes, l'outil (30) étant pourvu d'une couche comprenant des particules céramiques (14) sur une zone située radialement à l'extérieur de la surface formante pour pourvoir au moins une partie des flancs de jante (23, 24) servant de surface de freinage, d'une couche de freinage (33) en particules céramiques.

10. Procédé selon l'une quelconque des revendications précédentes, au moins une âme transversale (35) étant mise en oeuvre entre le creux de jante (21) et le fond de jante (22).

11. Procédé selon l'une quelconque des revendications précédentes, au moins une couche de renforcement des trous de rayon (10) étant mise en oeuvre et/ou au moins une couche d'indicateur d'usure (34) étant répartie sur les flancs de la jante.

12. Procédé selon l'une quelconque des revendications précédentes, au moins un noyau (7) en métal-eutectique étant utilisé et/ou lavé ou dissous.

13. Procédé selon l'une quelconque des revendications précédentes, au moins un noyau (7) étant rempli d'eau ou d'huile et relié à une valve de compensation de pression pour compenser la pression lors de la chauffe.

14. Procédé de construction d'une jante de bicyclette (20) en couches textiles à base d'un matériau renforcé de fibres, plus particulièrement pour les bicyclettes, la jante de bicyclette (20) comprenant un creux de jante (21), des flancs de jante (23, 24) pourvus de rebords de jante (25, 26) entre lesquels peut être inséré un pneumatique, l'outil (30) comprenant un moule (31) présentant une rainure circulaire revêtant la forme de la surface externe du fond (22) et des flancs de jante (23, 24),
**caractérisé en ce qu'**,
au moins deux bagues de creux de jante (2) et au moins une bague d'écartement (3) sont prévues pour donner leur forme au creux de jante (21) et aux rebords de la jante (25, 26), la bague d'écartement (3) étant cunéiforme et disposée entre les bagues de creux de jante (2) pour compresser les couches textiles au moins au niveau des rebords de jante (25, 26).

15. Dispositif selon la revendication précédente, la bague d'écartement (3) étant composée du même matériau que le moule (31), ce qui permet d'obtenir des pressions quasiment égales au moment du durcissement.
